# FASCICULE DE BREVET EUROPEEN

(11) **EP 0 857 497 B1**
(45) Date de publication et mention de la délivrance du brevet: **10.01.2001**
(21) Numéro de dépôt: 98400181.8
(22) Date de dépôt: 29.01.1998
(51) Int. Cl.: A63B 29/02

(54) **Procédé et dispositif pour la détection et la localisation de personnes ensevelies par exemple sous une avalanche**
Verfahren und Vorrichtung zur Detektion und zur Lokalisierung von verschütteten Personen, zum Beispiel unter einer Lawine
Method and device for the detection and location of buried persons, for example beneath an avalanche

(30) Priorité: 06.02.1997 FR 9701464
(43) Date de publication de la demande: 12.08.1998
(73) Titulaire: Option Industries, 38400 Saint Martin D'Heres (FR)
(72) Inventeur: Moulin, Jean-Marc, 38250 Lans En Vercors (FR)
(74) Mandataire: de Saint-Palais, Arnaud Marie

(56) Documents cités:
- EP-A- 0 855 600
- DE-A- 3 046 895
- DE-A- 3 248 950
- FR-A- 2 644 700
- US-A- 4 850 031
- LAMBERTON M: "EMETTEUR-RECEPTEUR DE SECOURS CONTRE LES AVALANCHES" ELECTRONIQUE RADIO PLANS, no. 567, 1 février 1994, pages 29-34, XP000494705

## Description

La présente invention concerne un procédé et un dispositif pour la détection et la localisation des victimes d'avalanches.

A l'heure actuelle, les dispositifs de ce type comprennent un émetteur/récepteur radio individuel et autonome, destiné à être porté par chaque personne courant le risque d'être victime d'une avalanche. Cet émetteur/récepteur émet un signal sous forme d'ondes électromagnétiques à une fréquence normalisée pouvant se propager à travers une couche de neige.

Lorsqu'une avalanche se produit, les personnes portant le dispositif peuvent effectuer elles-mêmes la recherche et la localisation des victimes de l'avalanche grâce à la fonction récepteur du dispositif. Il s'avère en effet que la survie des victimes d'avalanche dépend de la rapidité avec laquelle elles sont détectées et localisées.

La recherche des victimes consiste à quadriller la zone recouverte par l'avalanche avec un passage tous les 20 mètres, en écoutant les bips sonores correspondant au signal reçu par le récepteur et émis par le dispositif porté par la victime, et à se diriger dans la direction ou les bips ont une amplitude maximum.

Les dispositifs de ce type comprennent également un sélecteur de gain pour baisser le niveau sonore des bips, ce qui permet d'affiner la localisation d'une victime.

Un tel dispositif a par exemple été décrit dans le document "Emetteur-récepteur de secours contre les avalanches", M. Lamberton, publié dans la revue "Electronique Radio Plans" N°567, pages 29-34.

Il s'avère que l'utilisation des dispositifs actuels implique un bon entraînement pour bien maîtriser la technique de recherche de la victime, et un minimum de concentration, ainsi qu'un environnement non bruyant. Or, à la suite d'une avalanche, les sauveteurs qui appartiennent généralement au groupe des victimes sont pris de panique et éprouvent des difficultés de concentration pour quadriller précisément la zone de recherche, pour percevoir les faibles variations d'amplitude des bips sonores, et manipuler le sélecteur de gain, tâche par ailleurs difficile à exécuter car les sauveteurs portent généralement des gants de protection contre le froid.

Pour tenter de faciliter la recherche, on a déjà proposé d'adjoindre au dispositif un afficheur qui facilite la détection du signal maximum.

Les dispositifs décrits dans les documents US-A-4 850 031 et EP-A-0 855 600 (qui appartient à l'état de la technique selon l'article 54(3) CBE) comprennent deux antennes orientées dans des directions différentes, pour détecter la direction d'un appareil émetteur porté par une victime. Dans le premier de ces documents, la direction de la victime est déterminée à l'aide de deux antennes sensibles aux micro-ondes, tandis que la détection de la présence d'une victime est effectuée à l'aide d'une troisième antenne sensible aux ondes VHF. Un tel dispositif s'avère trop coûteux pour une utilisation par le grand public.

La présente invention a pour but d'améliorer les dispositifs existants, en particulier, en guidant le sauveteur dans chacune des phases de la recherche et en lui indiquant directement les opérations à réaliser. A cet effet, elle propose un procédé de guidage d'un sauveteur, portant un dispositif récepteur radio d'une fréquence normalisée, à la recherche d'une victime d'avalanche portant un dispositif émetteur radio qui émet en permanence un signal à une fréquence normalisée, l'appareil récepteur comprenant des moyens de réception couplés à un module de calcul et de commande conçu pour analyser les signaux reçus par les moyens de réception, le procédé comprenant les phases successives suivantes :
- une phase de détection de la présence de l'appareil émetteur porté par la victime au cours de laquelle le sauveteur effectue un quadrillage de la zone recouverte par l'avalanche, et
- une phase de recherche directionnelle de la victime au cours de laquelle le sauveteur fait tourner l'appareil récepteur sur lui-même autour d'un axe vertical, cette phase comprenant la mesure par le module de calcul et de commande de l'amplitude des signaux reçus dans au moins deux directions différentes, et la comparaison de ces amplitudes, pour déterminer la direction de l'appareil émetteur porté par la victime par rapport à l'orientation de l'appareil récepteur porté par le sauveteur, et la commande d'un premier moyen de signalisation pour donner au sauveteur une indication sur la direction de l'appareil émetteur.

Selon l'invention, ce procédé est caractérisé en ce que la phase de détection de la présence de l'appareil émetteur comprend la comparaison à un seuil bas par le module de calcul et de commande, de l'amplitude des signaux reçus par le récepteur, et la commande par le module de calcul et de commande d'un second moyen de signalisation pour signaler au sauveteur si l'amplitude du signal reçu dépasse ou non le seuil bas, le procédé comprenant en outre une phase de progression du sauveteur vers la victime, comprenant la mesure de l'amplitude des signaux reçus par le module de calcul et de commande, pour déterminer la direction de l'appareil émetteur porté par la victime par rapport à l'orientation de l'appareil récepteur porté par le sauveteur, la commande du premier moyen de signalisation, la comparaison de l'amplitude des signaux reçus à un seuil haut, et la commande d'un troisième moyen de signalisation pour indiquer au sauveteur si l'amplitude du signal reçu dépasse ou non le seuil haut.

Grâce à ces dispositions, le sauveteur est guidé directement vers la victime par une détection des lignes de champ maximum. Le procédé selon l'invention permet ainsi un gain de temps important dans la recherche des victimes, ce qui est primordial sachant que la probabilité de survie d'une personne ensevelie sous une avalanche décroît d'une manière exponentielle en fonction du temps.

En outre, les signaux envoyés au sauveteur par le dispositif récepteur sont directement utilisables dans la mesure où ils ne nécessitent pas une interprétation humaine. L'invention permet donc également de supprimer les erreurs d'interprétation des signaux reçus et de simplifier d'une manière importante l'utilisation des dispositifs de ce type, notamment en libérant le sauveteur de la tâche de manipulation du sélecteur de gain.

Selon une particularité de l'invention, la phase de détection de la présence d'une victime est suivie d'une phase d'apprentissage et de synchronisation au cours de laquelle le récepteur se synchronise sur le signal reçu et détermine une fenêtre temporelle périodique dans laquelle ce signal est reçu, les phases ultérieures n'effectuant des mesures que durant cette fenêtre temporelle périodique.

De cette manière, la recherche d'une victime n'est pas perturbée par les signaux émis par les émetteurs d'autres victimes.

Avantageusement, durant les phases de recherche de la victime, le procédé selon l'invention comprend en outre la conversion de l'amplitude du signal reçu en une distance correspondant à la distance entre le sauveteur et la victime, et l'affichage de cette distance.

Selon une autre particularité de l'invention, ce procédé comprend en outre la détermination du sens de rotation à appliquer au dispositif récepteur pendant la phase de recherche directionnelle, et la phase de progression, et l'indication au sauveteur de ce sens de rotation. Ainsi, le sauveteur est informé sur le sens vers lequel il doit tourner le dispositif récepteur pour l'orienter dans la direction du dispositif émetteur porté par la victime.

Comme précédemment mentionné, l'invention concerne également un dispositif pour la mise en oeuvre du procédé selon l'invention.

Un mode de mise en oeuvre du procédé selon l'invention sera décrit ci-après, à titre d'exemple non limitatif, avec référence aux dessins annexés dans lesquels :
La figure 1 représente schématiquement le synoptique d'un dispositif permettant la mise en oeuvre du procédé selon l'invention ;
La figure 2 montre plus en détail une partie du dispositif représenté sur la figure 1 ;
La figure 3 représente sous la forme d'un schéma bloc, l'enchaînement des différentes phases du procédé selon l'invention ;
La figure 4 représente sous la forme d'un schéma bloc, l'enchaînement des différentes étapes de la phase d'apprentissage et de synchronisation selon l'invention ;
La figure 5 représente schématiquement le synoptique d'une variante du dispositif de la figure 2 ;
La figure 6 représente le boîtier du dispositif selon la variante de la figure 5.

Le procédé selon l'invention est mis en oeuvre par exemple par un dispositif comprenant un émetteur et un récepteur, fonctionnant à la fréquence normalisée de 457 kHz. Ce dispositif est conçu pour être porté par les personnes courant un risque d'être enseveli par une avalanche, et par les sauveteurs de victimes d'avalanches.

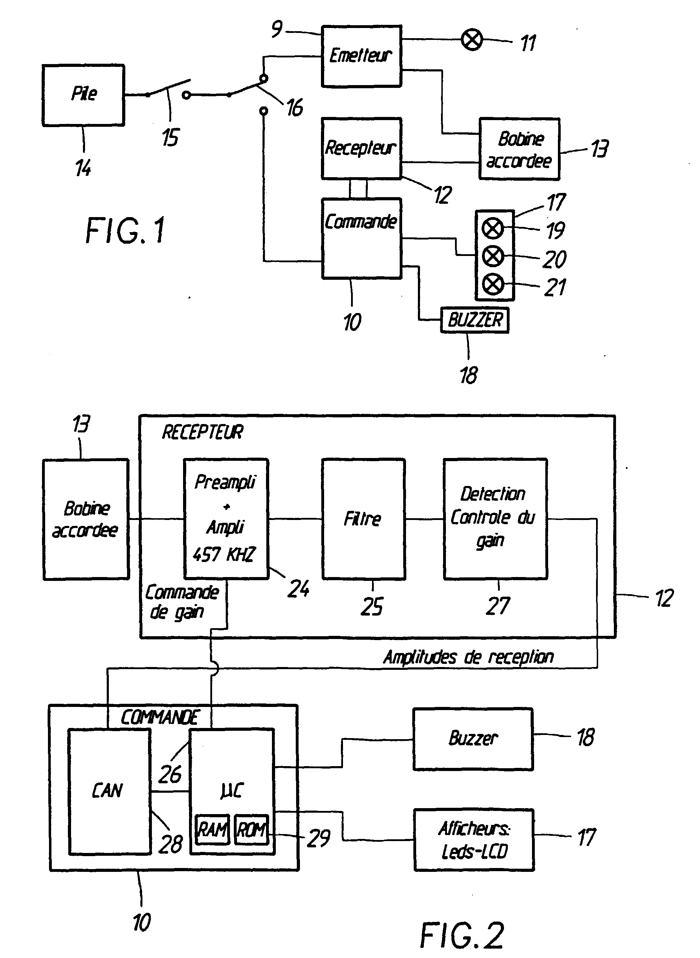

Un exemple de ce dispositif est représenté sur la figure 1. Sur cette figure, le dispositif comprend, d'une manière connue en soi, un module émetteur 9 et un module récepteur 12 connecté à une bobine 13 accordée sur la fréquence utilisée par les modules 9 et 12, soit par exemple 457 kHz. Selon l'invention, le dispositif comprend en outre un module de commande 10 recevant le signal reçu par le récepteur et commandant ce dernier, ainsi qu'un moyen de signalisation sonore 18, constitué par exemple par un vibreur, et un moyen de signalisation optique 17 comprenant par exemple des voyants lumineux 19, 20, 21 et/ou un barre-graphe lumineux et/ou un afficheur numérique à deux fois sept segments. Ces trois modules 9, 10, 12 sont alimentés par une source d'énergie 14 qui peut par exemple être constituée par une pile, par l'intermédiaire d'un interrupteur marche/arrêt 15, les bornes d'alimentation des modules émetteur 9 et récepteur 12 étant connectées à l'interrupteur 15 par l'intermédiaire d'un sélecteur d'émission ou de réception 16, permettant d'activer soit le module émetteur 9 pour émettre en permanence un signal lorsque l'utilisateur traverse une zone dans laquelle peut se produire une avalanche, soit le module récepteur 12 pour rechercher des victimes d'avalanche.

Le module émetteur 9 qui présente une structure connue en soi, est relié à un voyant lumineux 11 permettant de signaler à l'utilisateur que le dispositif se trouve en mode émission. Il comprend un émetteur radio émettant des ondes électromagnétiques sur la fréquence normalisée de 457 kHz, cette fréquence étant modulée par un signal impulsionnel formé d'impulsions, par exemple de 70 millisecondes de durée, et espacées de 1 seconde.

La figure 2 montre plus en détail le module récepteur 12 et le module de commande 10. Le module récepteur comprend un étage de préamplification et d'amplification 24 connecté à la bobine accordée 13, un moyen de filtrage passe-bande 25 centré sur la fréquence normalisée de 457 kHz connecté à la sortie de l'étage 24, et un circuit 27 de détection de signal et de contrôle du gain appliqué à l'amplitude du signal issu du moyen de filtrage 25. Ce circuit 27 applique une loi logarithmique à l'amplitude du signal reçu, amplifié et filtré, ce qui permet de réduire la plage des valeurs possibles de l'amplitude du signal reçu par le module récepteur 12.

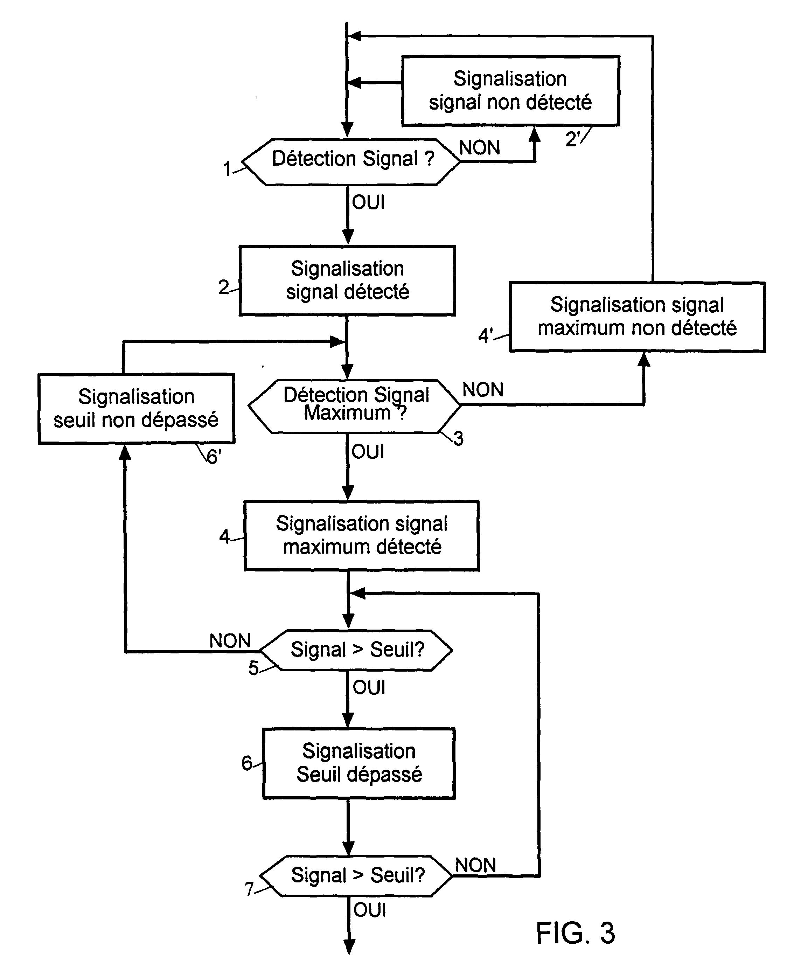

Par ailleurs, le module de commande 10 comprend un convertisseur analogique/numérique 28 qui convertit le signal en sortie du circuit 27 en un signal numérique, le signal numérique étant appliqué en entrée d'un micro-contrôleur 26 qui effectue l'analyse de l'amplitude du signal reçu numérisé en vue de commander le vibreur 18 et l'afficheur 17, ainsi que le gain de l'étage 24, auxquels il est connecté. Le micro-contrôleur 26 est commandé par un programme stocké dans une mémoire interne non volatile 29, qui contrôle le séquencement des opérations du procédé représenté sur la figure 3.

Lorsqu'une avalanche se produit, les sauveteurs munis du dispositif se mettent à la recherche des victimes de l'avalanche. A cet effet, ils activent la fonction récepteur du dispositif à l'aide du sélecteur 16, et effectuent la recherche en quadrillant la zone recouverte par l'avalanche.

Lorsque le module récepteur 12 est activé grâce au commutateur 16, le micro-contrôleur 26 règle le gain de l'étage amplificateur 24 de manière à obtenir une sensibilité maximum. Sur la figure 3, le procédé selon l'invention comprend alors une phase de détection d'un ou plusieurs signaux émis par les dispositifs portés par les victimes de l'avalanche. Durant cette phase, le signal reçu par le module récepteur 12 du dispositif est comparé par le micro-contrôleur 26 à un seuil bas supérieur au niveau de bruit naturel, qui peut être calculé en fonction de l'amplitude du bruit naturel (étape 1). Lorsque le signal reçu dépasse ce seuil bas, le micro-contrôleur 26 déclenche l'émission d'un signal optique et/ou sonore au moyen du vibreur 18 et des voyants lumineux 17, pour signaler ce fait au porteur du dispositif (étape 2). L'émission du signal optique qui consiste par exemple à allumer le voyant lumineux 19, peut être maintenue tant que le signal reçu dépasse ce seuil bas.

Le signal sonore peut par exemple consister en deux bips de 3 secondes espacés d'une seconde.

Ce signal optique et/ou sonore indique au sauveteur qu'il doit effectuer une rotation sur lui-même en tenant le dispositif horizontal, pendant que celui-ci analyse l'amplitude du signal reçu pour détecter un maximum (étape 3). Lorsque ce maximum est détecté, le micro-contrôleur 26 déclenche l'émission d'un nouveau signal sonore et/ou optique, par exemple en allumant le voyant 20, de manière à indiquer au sauveteur que le dispositif se trouve dans la direction d'une victime (étape 4).

Pendant la recherche de la direction de la victime, le micro-contrôleur 26 peut commander l'émission d'un signal sonore de fréquence faible qui varie en fonction de l'amplitude du signal reçu, vers le vibreur 18.
Bien entendu, pendant cette recherche, le micro-contrôleur continue à surveiller la présence d'un signal (étape 2) et à commander le voyant 19 (étapes 2 et 2') suivant qu'un signal est présent ou non.

Lorsqu'il a détecté le passage du signal reçu par un maximum d'amplitude, le micro-contrôleur 26 peut en outre donner au sauveteur une indication sur la distance le séparant de la victime en commandant l'allumage sélectif d'une barrette de diodes électroluminescentes associées chacune à une distance ou en affichant la distance à l'aide d'un afficheur numérique à deux fois sept segments. Cette valeur de distance est calculée en fonction de l'amplitude du signal reçu, par exemple à l'aide d'une table stockée en mémoire 29, faisant correspondre les valeurs possibles de l'amplitude du signal reçu avec des valeurs de distance.

Lorsque le micro-contrôleur 26 a indiqué au sauveteur que le maximum du signal est atteint, ce dernier doit alors se diriger dans la direction indiquée par l'orientation du dispositif à l'instant où le maximum d'amplitude a été détecté. Pendant ce déplacement, le micro-contrôleur 26 poursuit la recherche du signal maximum pour vérifier que le sauveteur se dirige bien dans la direction indiquée et effectue au fur et à mesure, automatiquement, les corrections de gain nécessaires pour que l'amplitude du signal reçu reste dans la plage de sensibilité des moyens de mesure du dispositif, en particulier du convertisseur 28. Si l'amplitude du signal reçu décroît, le voyant lumineux 20 indiquant que la direction de la victime est détectée s'éteint (étape 4'), éventuellement avec un signal sonore particulier, et les étapes 1 à 3 sont à recommencer.

De cette manière, le sauveteur est guidé dans un canal qui aboutit à la victime portant le dispositif en position émetteur.

Il s'avère en effet que les lignes de champ électromagnétiques des émetteurs sont de forme ovale dont le grand rayon se situe dans l'axe de la bobine d'émission. Par conséquent, pour se maintenir sur une ligne de champ, le sauveteur doit parcourir une trajectoire courbe pour rester sur la même ligne de champ présentant un maximum d'amplitude, ce qui est particulièrement délicat en l'absence d'un contrôle en temps réel de la direction de progression du sauveteur.

La recherche des valeurs maximum atteintes par l'amplitude du signal reçu est effectuée par exemple en déterminant son sens d'évolution, constant, en croissance ou en décroissance, qui peut être obtenu en mémorisant la valeur de l'amplitude mesurée précédemment, et en comparant la dernière valeur mesurée avec celle mémorisée. Pour déterminer les instants où l'amplitude du signal reçu atteint une valeur maximum, il suffit alors de détecter que le sens d'évolution de l'amplitude devient décroissant après avoir été constant ou croissant.

Pendant la progression du sauveteur dans la direction indiquée par le micro-contrôleur 26, celui-ci compare également l'amplitude du signal reçu avec un seuil haut qui est dépassé lorsque le sauveteur se trouve à proximité de l'endroit où se trouve ensevelie la victime portant le dispositif en position émetteur (étape 5). Lorsque ce seuil est dépassé, le dispositif en avertit le sauveteur en allumant un voyant lumineux 21 prévu à cet effet, et en émettant un signal sonore, par exemple d'une durée de 10 secondes (étape 6).
Cette signalisation indique au sauveteur qu'il se trouve, par exemple, à moins de 3 mètres de la victime.

Tant que le sauveteur ne met pas fin à la recherche (étape 7), le micro-contrôleur 26 continue à analyser le signal reçu pour déterminer si son amplitude croît ou décroît, ceci afin d'indiquer au sauveteur si l'amplitude du signal reçu a atteint ou non un maximum, et si celle-ci dépasse ou non le seuil haut, et à commander l'allumage ou l'extinction des voyants 19, 20, 21 correspondants (étapes 3, 4, 4', 5, 6, 6' et 7). De cette manière, le sauveteur peut déterminer précisément la position de la victime en effectuant le quadrillage d'une zone d'étendue limitée (inférieure à 3 mètres de diamètre) dans laquelle l'amplitude du signal reçu dépasse le seuil haut, et tout en étant informé des endroits où l'amplitude du signal reçu atteint une valeur maximum à l'aide du voyant indicateur de la direction. Lorsque la victime est précisément localisée, le sauveteur peut commencer à la dégager à l'aide d'une pelle.

Selon une particularité de l'invention, l'étape 2 est suivie d'une phase d'apprentissage et de synchronisation sur le signal reçu par le module récepteur 12, de manière à éviter que le dispositif soit perturbé par les signaux émis par les émetteurs portés par d'autres victimes. En effet, dans une avalanche, il est courant d'avoir plusieurs victimes ensevelies et possédant chacune un émetteur fonctionnant conformément à la norme internationale d'émission des appareils de recherche de victimes d'avalanches.

La norme définit que l'émission doit s'effectuer à 457 kHz avec une modulation d'amplitude de 100%. Chaque impulsion émise est définie par une durée comprise entre 70 ms et 1,1 s, avec une période comprise entre 0,5 et 1,3 s.

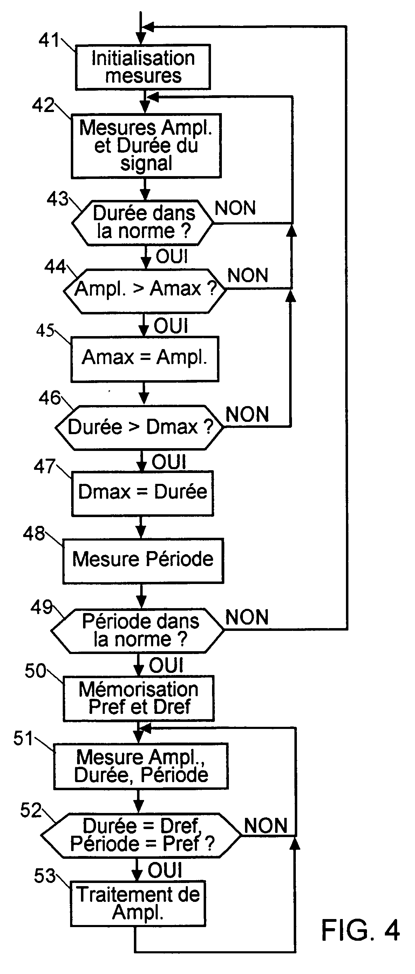

Sur la figure 4, lorsque la fonction récepteur est activée, le micro-contrôleur 26 effectue l'initialisation des différentes mesures qu'il a mémorisé précédemment (étape 41).
Après avoir détecté la présence d'une victime le micro-contrôleur 26 qui reçoit en permanence le signal reçu filtré et numérisé, se met en phase d'apprentissage et de synchronisation. Pour cela, il effectue des mesures d'amplitude et de durée de chaque impulsion du signal reçu (étape 42) et vérifie aux étapes 43, 44 et 46 que la durée des impulsions se situe dans la norme (comprise entre 70 ms et 1,1 ms), que l'amplitude et la durée des impulsions mesurées restent constantes ou augmentent. Tant que le signal reçu n'est pas conforme, le micro-contrôleur 26 répète les étapes 42 à 46. Dès qu'il est conforme, le micro-contrôleur 26 mémorise les valeurs maximum Amax et Dmax de l'amplitude et de la durée (étapes 45 et 47), synchronise sa base de temps sur le début de réception de chaque impulsion du signal reçu (étape 48), et vérifie la récurrence de ce signal sur plusieurs périodes. Si à l'étape 49, la période n'est pas dans la norme (comprise entre 0,5 et 1,3 s), le micro-contrôleur 26 répète les étapes 41 à 49.
Dans le cas contraire, le micro-contrôleur 26 se synchronise sur ce signal en ne tenant compte que des mesures qu'il reçoit pendant la durée Dmax (étape 51). Pendant tout le reste de la recherche (étapes 52 et 53), il vérifie que toutes les mesures prises en compte sont valides, c'est-à-dire, se trouvent dans les fenêtres prédéfinies, et si ces valeurs sont valides, il met à jour les caractéristiques de la fenêtre de réception, de manière à parfaire la synchronisation entre l'émetteur de la victime recherchée et le récepteur. Si temporairement, les mesures ne sont pas valides, il conserve les fenêtres précédentes. Si durant trois périodes successives, le micro-contrôleur 26 ne détecte plus l'émetteur synchronisé, il annule les valeurs de la fenêtre de réception et reprend la séquence d'apprentissage (étape 41) des caractéristiques du signal reçu le plus puissant.

Le sauveteur est ainsi dirigé vers une seule victime et lorsqu'il aura secouru celle-ci, il pourra intervenir sur les autres victimes.

Selon une variante d'exécution de l'invention, lorsque le seuil haut est dépassé (étapes 5 à 7), le micro-contrôleur 26 déclenche l'émission d'un signal sonore en envoyant sur le vibreur 18 un signal constitué de bips dont la fréquence d'émission varie en fonction de l'amplitude du signal reçu. La fréquence d'émission de ces bips est par exemple égale à 2 Hz lorsque l'amplitude du signal reçu correspond à une distance entre le sauveteur et la victime de l'ordre de 5 m. Le micro-contrôleur 26 augmente cette fréquence progressivement au fur et à mesure que l'amplitude du signal reçu augmente et donc que le sauveteur se rapproche de la victime, pour atteindre un signal sonore continu lorsque la distance entre le sauveteur et la victime est inférieure à 0,5 m.

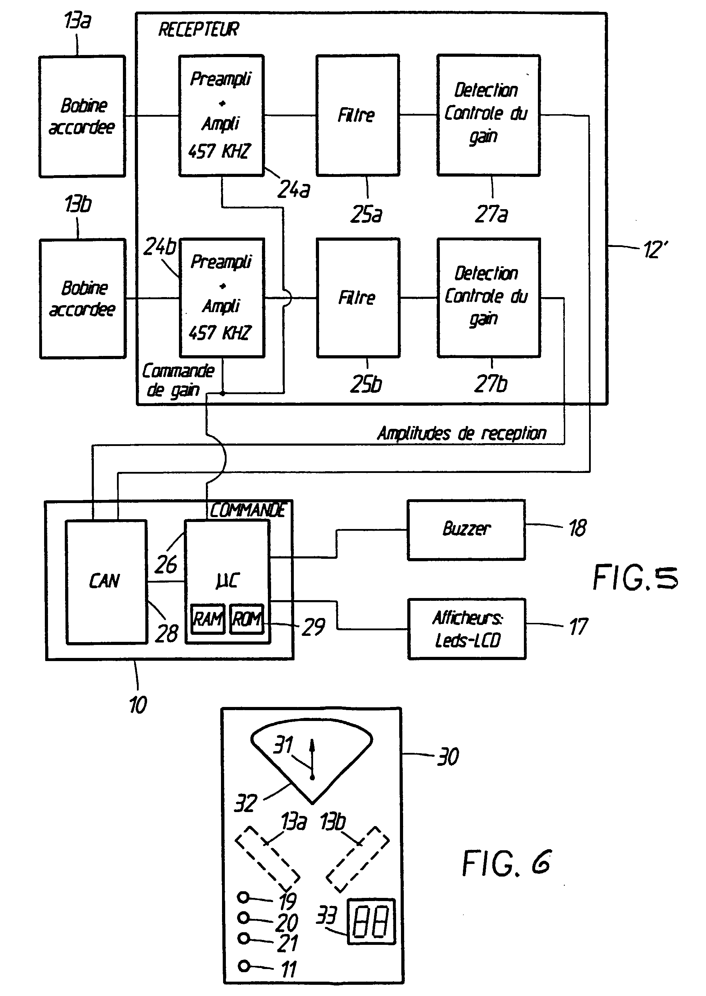

Selon une autre variante d'exécution de l'invention représentée sur la figure 5, le dispositif récepteur 12'est relié à deux bobines accordées 13a et 13b disposées en V l'une par rapport à l'autre. Il comprend deux étages de préamplification et d'amplification 24a, 24b connectés respectivement aux deux bobines accordées 13a, 13b, deux circuits de filtrage passe-bande 25a, 25b centrés sur la fréquence normalisée de 457 kHz et connectés respectivement à la sortie des étages 24a, 24b, et deux circuits 27a, 27b de détection de signal et de contrôle du gain appliqués à l'amplitude des signaux issus des circuits de filtrage 25a, 25b.

Ainsi, le circuit récepteur 12' fournit au module de commande 10 deux signaux d'amplitude correspondant aux signaux reçus par les bobines 13a, 13b.

En comparant l'amplitude des signaux reçus par les bobines 13a, 13b au cours de l'étape 3, le module de calcul peut déterminer le sens de rotation à appliquer à l'appareil du sauveteur pendant la recherche directionnelle de la victime. Ainsi, par exemple, si la bobine de gauche reçoit le signal le plus fort, la direction de la victime se trouve vers la gauche. Lorsque les deux bobines reçoivent un signal de même amplitude, cela signifie que l'appareil de la victime se trouve dans la direction pointée par l'ensemble des deux bobines 13a, 13b, correspondant à la direction de la bissectrice intérieure de l'angle formée par les deux bobines. Le rapport entre l'amplitude des signaux reçus par les deux bobines varie donc en fonction de l'angle qui existe entre la direction de l'appareil de la victime et direction pointée par l'ensemble des deux bobines. Ce rapport est utilisé pour piloter un indicateur de direction, tel qu'une flèche pivotante ou un ensemble de diodes électroluminescentes disposées en arc de cercle, au cours des étapes 2, 4 et 4'.

Dans cette variante, seule l'une des deux bobines (13a, 13b) est utilisée en émission.

Par ailleurs, il est à noter que dans le cas où les bobines (13a, 13b) ne sont pas orientées dans la direction de la victime, l'indication de distance qui est calculée en fonction de l'amplitude du signal reçu n'a pas de signification. Pour supprimer cet inconvénient, le calcul de distance tient compte du rapport des amplitudes des signaux reçus par les deux bobines.

La figure 6 représente le boîtier 30 du dispositif selon l'invention, ce boîtier renfermant les deux bobines 13a, 13b disposées en V l'une par rapport à l'autre, et comprenant :
- un cadran 32 comprenant une flèche 31 pivotante dont la position médiane correspond à la bissectrice intérieure de l'angle formé par les deux bobines 13a, 13b,
- les voyants lumineux 11 et 19 à 21, et
- un afficheur numérique 33 à deux fois sept segments.

Les deux bobines sont disposées de manière à former un angle par exemple situé au voisinage de 90°.

## Revendications

1. Procédé de guidage d'un sauveteur portant un appareil récepteur radio sensible à une fréquence normalisée, à la recherche d'une victime d'avalanche portant un appareil émetteur radio qui émet en permanence un signal sous la forme d'ondes électromagnétiques, à une fréquence normalisée, l'appareil récepteur comprenant des moyens de réception (12) couplés à un module de calcul et de commande (10) conçu pour analyser les signaux reçus par les moyens de réception, le procédé comprenant les phases successives suivantes :
- une phase de détection de la présence de l'appareil émetteur porté par la victime au cours de laquelle le sauveteur effectue un quadrillage de la zone recouverte par l'avalanche, et
- une phase de recherche directionnelle de la victime au cours de laquelle le sauveteur fait tourner l'appareil récepteur sur lui-même autour d'un axe vertical, cette phase comprenant la mesure par le module de calcul et de commande (10) de l'amplitude des signaux reçus dans au moins deux directions différentes, la comparaison de ces amplitudes par le module (10), pour déterminer la direction de l'appareil émetteur porté par la victime par rapport à l'orientation de l'appareil récepteur porté par le sauveteur, et la commande (4, 4') par le module (10) d'un premier moyen de signalisation donnant au sauveteur une indication sur la direction de l'appareil émetteur,
caractérisé en ce que :
- la phase de détection de la présence de l'appareil émetteur comprend la comparaison (1) à un seuil bas par le module de calcul et de commande (10), de l'amplitude des signaux reçus par l'appareil récepteur, et la commande (2, 2') par le module de calcul et de commande (10) d'un second moyen de signalisation pour signaler au sauveteur si l'amplitude du signal reçu dépasse ou non le seuil bas,
- le procédé comprend en outre une phase de progression du sauveteur vers la victime, comprenant la mesure par le module de calcul et de commande (10) de l'amplitude des signaux reçus pour déterminer la direction de l'appareil émetteur porté par la victime par rapport à l'orientation de l'appareil récepteur porté par le sauveteur, la commande (4, 4') par le module (10) du premier moyen de signalisation, la comparaison (5) par le module (10) de l'amplitude des signaux reçus à un seuil haut, et la commande (6, 6') par le module (10) d'un troisième moyen de signalisation pour indiquer au sauveteur si l'amplitude du signal reçu dépasse ou non le seuil haut.

2. Procédé selon la revendication 1,
caractérisé en ce qu'il comprend la détection par le module de calcul et de commande (10) des instants où l'amplitude des signaux reçus atteint une valeur maximum, pour déterminer la direction de l'appareil émetteur porté par la victime par rapport à l'orientation de l'appareil récepteur porté par le sauveteur.

3. Procédé selon la revendication 1,
caractérisé en ce qu'il comprend la mesure simultanée par le module de calcul et de commande (10) des amplitudes de signaux provenant respectivement de deux directions différentes, et la comparaison de ces amplitudes, pour déterminer la direction de l'appareil émetteur porté par la victime par rapport à l'orientation de l'appareil récepteur porté par le sauveteur.

4. Procédé selon l'une des revendications précédentes,
caractérisé en ce que la phase de détection comprend le réglage automatique par le module de calcul et de commande (10) de la sensibilité du récepteur au maximum, tandis que les phases de recherche directionnelle et de progression comprennent le réglage automatique par le module (10) de la sensibilité du récepteur de manière à ce que l'amplitude des signaux reçus reste dans une plage de valeurs prédéterminée.

5. Procédé selon l'une des revendications précédentes,
caractérisé en ce qu'à la suite de la phase de détection de l'appareil émetteur, il comprend une phase de synchronisation et d'apprentissage au cours de laquelle le module de calcul et de commande (10) synchronise les moyens de réception (12) sur les signaux reçus et détermine une fenêtre temporelle périodique dans laquelle ces signaux sont reçus, les phases ultérieures n'effectuant des mesures que durant cette fenêtre temporelle périodique.

6. Procédé selon l'une des revendications 3 à 5,
caractérisé en ce que les phases de recherche directionnelle et de progression comprennent en outre la détermination par le module de calcul et de commande (10) du sens de rotation à appliquer au dispositif récepteur et l'indication au sauveteur de ce sens de rotation.

7. Procédé selon la revendication 6,
caractérisé en ce qu'il comprend en outre la détermination par le module de calcul et de commande (10) de l'angle formé par la direction pointée par le dispositif récepteur et la direction du dispositif émetteur porté par la victime, et l'indication au sauveteur de la valeur de cet angle.

8. Procédé selon la revendication 2,
caractérisé en ce qu'il comprend en outre une phase de localisation précise de la victime au cours de laquelle le sauveteur quadrille la zone dans laquelle les signaux reçus dépassent le seuil haut, cette phase comprenant l'analyse (3, 5) par le module de calcul et de commande (10) des signaux reçus pour déterminer les instants où leur amplitude dépasse le seuil haut et ceux où elle atteint une valeur maximum, et la commande (4, 4', 6, 6') par le module (10) du second et du troisième moyen de signalisation suivant que l'amplitude des signaux reçus atteint ou non une valeur maximum et dépasse ou non le seuil haut.

9. Procédé selon la revendication 2 ou 8,
caractérisé en ce que la détermination (3) des instants où l'amplitude des signaux reçus atteint une valeur maximum est effectuée en déterminant le sens d'évolution de l'amplitude et en le comparant à la valeur précédente de celui-ci, l'amplitude des signaux reçus étant considérée maximum lorsqu'elle devient décroissante après avoir été croissante ou constante.

10. Procédé selon l'une des revendications 2, 8 et 9,
caractérisé en ce qu'il comprend l'émission (2, 2', 4, 4', 6, 6') de signaux sonores aux instants où l'amplitude des signaux reçus franchit le seuil bas, où elle atteint une valeur maximum et où elle diminue, et où elle franchit le seuil haut.

11. Procédé selon l'une des revendications précédentes,
caractérisé en ce qu'il comprend la détermination par le module (10) de la distance entre le dispositif récepteur et le dispositif émetteur en fonction de l'amplitude des signaux reçus, et l'indication au sauveteur de la valeur de cette distance.

12. Procédé selon l'une des revendications précédentes,
caractérisé en ce qu'il comprend la détermination par le module de calcul et de commande (10) de la distance entre le dispositif récepteur et le dispositif émetteur en fonction de l'amplitude des signaux reçus et l'indication au sauveteur de la valeur de cette distance par émission de bips sonores dont la fréquence d'émission varie en fonction de cette valeur.

13. Dispositif pour la recherche d'une victime d'avalanche portant un appareil émetteur radio qui émet en permanence un signal sous la forme d'ondes électromagnétiques, à une fréquence normalisée, ce dispositif comprenant un module récepteur (12) conçu pour recevoir les signaux émis par l'appareil émetteur porté par la victime, des moyens de signalisation et un module de calcul et de commande (10) connecté à la sortie du module récepteur (12) et aux moyens de signalisation (17, 18), pour commander les moyens de signalisation en fonction de l'amplitude des signaux reçus par le module récepteur, le module (10) comprenant :
- des moyens pour mesurer l'amplitude des signaux reçus par le module récepteur (12), et
- des moyens pour comparer entre elles les amplitudes respectives de signaux reçus dans au moins deux directions différentes, de manière à déterminer la direction de l'appareil émetteur porté par la victime par rapport à l'orientation du module récepteur, et pour commander un premier moyen de signalisation indiquant la direction de l'appareil émetteur ainsi déterminée,
caractérisé en ce que le module (10) comprend en outre :
- des moyens pour comparer à un seuil bas l'amplitude des signaux reçus par le module récepteur (12) et pour commander un second moyen de signalisation selon que l'amplitude du signal reçu dépasse ou non le seuil bas, et
- des moyens pour comparer l'amplitude des signaux reçus à un seuil haut et pour commander un troisième moyen de signalisation selon que l'amplitude du signal reçu dépasse ou non le seuil haut.

14. Dispositif selon la revendication 13,
caractérisé en ce que le module récepteur (12) comprend un étage de pré-amplification et d'amplification (24) des signaux reçus par une bobine accordée (13) à la fréquence normalisée, un moyen de filtrage passe-bande (25) centré sur la fréquence normalisée pour filtrer les signaux issus de l'étage (24), et un circuit de détection (27) de signal et de contrôle de gain qui reçoit en entrée les signaux issus du moyen de filtrage (25) pour leur appliquer une fonction logarithmique.

15. Dispositif selon la revendication 14,
caractérisé en ce qu'il comprend un convertisseur analogique / numérique (28) pour convertir les signaux issus du circuit de détection (27) en signaux numériques, lesquels sont appliqués en entrée de moyens de calcul (26).

16. Dispositif selon l'une des revendications 13 à 15,
caractérisé en ce que le module de calcul (10) comprend des moyens pour commander le gain appliqué aux signaux reçus par l'étage de pré-amplification et d'amplification (24).

17. Dispositif selon l'une des revendications 13 à 16,
caractérisé en ce que le module récepteur (12) est connecté à deux bobines accordées (13a, 13b) et en ce qu'il comprend deux chaînes de traitement de signal reliées respectivement aux bobines accordées, chacune des deux chaînes comprenant un étage de pré-amplification et d'amplification (24a, 24b), un circuit de filtrage (25a, 25b) et un circuit de détection (27a, 27b) de signal et de contrôle de gain, ces deux chaînes fournissant au module de calcul (10) deux signaux représentatifs de l'amplitude des signaux reçus par les deux bobines (13a, 13b).

18. Dispositif selon l'une des revendications 13 à 17,
caractérisé en ce qu'il comprend des moyens de signalisation sonores (18) et optiques (17), commandés par le module de calcul (10) en fonction de l'amplitude des signaux reçus, les moyens optiques comprenant :
- un premier voyant (19) indiquant qu'un signal à la fréquence normalisée dont l'amplitude dépasse le seuil bas a été reçu par le module récepteur,
- un second voyant (20) indiquant que l'amplitude des signaux reçus se trouve à une valeur maximum, et
- un troisième voyant (21) indiquant que l'amplitude des signaux reçus dépasse le seuil haut.

19. Dispositif selon l'une des revendications 15 à 18,
caractérisé en ce que le module de calcul (10) comprend un micro-contrôleur (26) commandé par un programme stocké dans une mémoire non volatile (29), pour effectuer l'analyse des signaux reçus et numérisés par le convertisseur analogique / numérique (28), commander le gain de l'étage (24) et les moyens de signalisation sonores et optiques (17, 18).

20. Dispositif selon l'une des revendications 13 à 19,
caractérisé en ce que la victime porte un appareil identique à celui du sauveteur, le dispositif comprenant un sélecteur (16) permettant alternativement d'activer le module émetteur (9), ou d'activer le module récepteur (12).

21. Dispositif selon l'une des revendications 13 à 20,
caractérisé en ce que l'appareil porté par le sauveteur comprend une barrette (17) de diodes électroluminescentes ou un afficheur numérique (33) indiquant la distance le séparant de la victime, calculée en fonction de l'amplitude du signal reçu.

## Patentansprüche

1. Verfahren zum Führen eines Retters, der ein Funkempfangsgerät trägt, das auf eine standardisierte Frequenz anspricht, auf der Suche nach einem Lawinenopfer, das ein Funksendegerät trägt, welches ständig ein Signal in Form elektromagnetischer Wellen mit einer standardisierten Frequenz aussendet, wobei das Empfangsgerät Empfangsmittel (12) umfaßt, die mit einem Rechen- und Steuermodul (10) gekoppelt sind, das zum Analysieren der von den Empfangsmitteln empfangenen Signale ausgelegt ist, wobei das Verfahren nacheinander die folgenden Phasen umfaßt:
- eine Phase zur Detektion der Gegenwart des von dem Opfer getragenen Sendegerätes, in deren Verlauf der Retter eine Karierung des von der Lawine bedeckten Bereiches durchführt, und
- eine Phase der Richtungssuche nach dem Opfer, in deren Verlauf der Retter das Empfangsgerät um sich selbst um eine vertikale Achse dreht, wobei diese Phase das Messen der Amplitude der empfangenen Signale durch das Rechen- und Steuermodul (10) in wenigstens zwei verschiedenen Richtungen, den Vergleich dieser Amplituden durch das Modul (10), um die Richtung des von dem Opfer getragenen Sendegerätes in bezug auf die Ausrichtung des vom Retter getragenen Empfangsgerätes zu bestimmen, und die Steuerung (4, 4') eines ersten Signalisierungsmittel, das dem Retter die Richtung des Sendegerätes anzeigt, durch das Modul (10) umfaßt,
dadurch gekennzeichnet, daß:
- die Phase zur Detektion der Gegenwart des Sendegerätes den Vergleich (1) mit einer niedrigen Schwelle der Amplitude der vom Empfangsgerät empfangenen Signale durch das Rechen- und Steuermodul (10) und die Steuerung (2, 2') eines zweiten Signalisierungsmittels durch das Rechen- und Steuermodul (10) umfaßt, um dem Retter zu signalisieren, ob die Amplitude des empfangenen Signals die niedrige Schwelle überschreitet oder nicht,
- das Verfahren zusätzlich eine Phase zum Heranführen des Retters an das Opfer umfaßt, die das Messen der Amplitude der empfangenen Signale durch das Rechen- und Steuermodul (10), um die Richtung des vom Opfer getragenen Sendegerätes relativ zur Ausrichtung des vom Retter getragenen Empfangsgerätes zu bestimmen, die Steuerung (4, 4') des ersten Signalisierungsmittels durch das Modul (10), den Vergleich (5) der Amplitude der empfangenen Signale mit einer hohen Schwelle durch das Modul (10) und die Steuerung (6, 6') eines dritten Signalisierungsmittels durch das Modul (10) umfaßt, um dem Retter anzuzeigen, ob die Amplitude des empfangenen Signals die hohe Schwelle überschreitet oder nicht.

2. Verfahren nach Anspruch 1, dadurch gekennzeichnet, daß es die Detektion der Zeitpunkte, zu denen die Amplitude der empfangenen Signale einen maximalen Wert erreicht, durch das Rechen- und Steuermodul (10) umfaßt, um die Richtung des vom Opfer getragenen Sendegerätes relativ zur Ausrichtung des vom Retter getragenen Empfangsgerätes zu bestimmen.

3. Verfahren nach Anspruch 1, dadurch gekennzeichnet, daß es das gleichzeitige Messen der Amplituden von Signalen, die jeweils aus zwei verschiedenen Richtungen stammen, und den Vergleich dieser Amplituden durch das Rechen- und Steuermodul (10) umfaßt, um die Richtung des vom Opfer getragenen Sendegerätes relativ zur Ausrichtung des vom Retter getragenen Empfangsgerätes zu bestimmen.

4. Verfahren nach einem der vorhergehenden Ansprüche, dadurch gekennzeichnet, daß die Detektionsphase die automatische Regelung der Empfindlichkeit des Empfängers auf das Maximum durch das Rechen- und Steuermodul (10) umfaßt, während die Phasen der Richtungssuche und des Heranführens die automatische Einstellung der Empfindlichkeit des Empfängers durch das Modul (10) umfassen, damit die Amplitude der empfangenen Signale in einem vorbestimmten Wertebereich bleibt.

5. Verfahren nach einem der vorhergehenden Ansprüche, dadurch gekennzeichnet, daß es nach der Phase zur Detektion des Sendegerätes eine Synchronisations- und Lernphase umfaßt, in deren Verlauf das Rechen- und Steuermodul (10) die Empfangsmittel (12) mit den empfangenen Signalen synchronisiert und ein periodisches Zeitfenster bestimmt, in dem diese Signale empfangen werden, wobei die nachfolgenden Phasen nur während dieses periodischen Zeitfensters Messungen durchführen.

6. Verfahren nach einem der Ansprüche 3 bis 5, dadurch gekennzeichnet, daß die Phasen der Richtungssuche und des Heranführens zusätzlich die Bestimmung der auf das Empfangsgerät anzuwendenden Drehrichtung und die Anzeige dieser Drehrichtung für den Retter durch das Rechen- und Steuermodul (10) umfassen.

7. Verfahren nach Anspruch 6, dadurch gekennzeichnet, daß es zusätzlich die Bestimmung des Winkels, der durch die vom Empfangsgerät gezeigte Richtung gebildet wird, und der Richtung des vom Opfer getragenen Sendegerätes sowie die Anzeige des Wertes dieses Winkels für den Retter durch das Rechen- und Steuermodul (10) umfaßt.

8. Verfahren nach Anspruch 2, dadurch gekennzeichnet, daß es ferner eine Phase zur genauen Lokalisierung des Opfers umfaßt, in deren Verlauf der Retter den Bereich kariert, in dem die empfangenen Signale die hohe Schwelle überschreiten, wobei diese Phase folgendes umfaßt: die Analyse (3, 5) der empfangenen Signale durch das Rechen- und Steuermodul (10), um die Zeitpunkte, zu denen ihre Amplitude die hohe Schwelle überschreitet, und die, zu denen sie einen maximalen Wert erreicht, zu bestimmen, und die Steuerung (4, 4', 6, 6') des zweiten und dritten Signalisierungsmittels durch das Modul (10) in Abhängigkeit davon, ob die Amplitude der empfangenen Signale einen maximalen Wert erreicht oder nicht und die hohe Schwelle überschreitet oder nicht.

9. Verfahren nach Anspruch 2 oder 8, dadurch gekennzeichnet, daß die Bestimmung (3) der Zeitpunkte, zu denen die Amplitude der empfangenen Signale einen maximalen Wert erreicht, durchgeführt wird, indem die Evolutionsrichtung der Amplitude bestimmt und mit ihrem vorhergehenden Wert verglichen wird, wobei die Amplitude der empfangenen Signale als maximal betrachtet wird, wenn sie abnimmt, nachdem sie angestiegen oder konstant war.

10. Verfahren nach einem der Ansprüche 2, 8 und 9, dadurch gekennzeichnet, daß es das Senden (2, 2', 4, 4', 6, 6') von Tonsignalen zu den Zeitpunkten umfaßt, zu denen die Amplitude der empfangenen Signale die niedrige Schwelle überschreitet, einen maximalen Wert erreicht und abnimmt, oder die hohe Schwelle überschreitet.

11. Verfahren nach einem der vorhergehenden Ansprüche, dadurch gekennzeichnet, daß es die Bestimmung der Entfernung zwischen dem Empfangsgerät und dem Sendegerät in Abhängigkeit von der Amplitude der empfangenen Signale und die Anzeige des Wertes dieser Entfernung für den Retter durch das Modul (10) umfaßt.

12. Verfahren nach einem der vorhergehenden Ansprüche, dadurch gekennzeichnet, daß es die Bestimmung der Entfernung zwischen dem Empfangsgerät und dem Sendegerät in Abhängigkeit von der Amplitude der empfangenen Signale und die Anzeige des Wertes dieser Entfernung für den Retter durch Aussenden von Piepstönen, deren Sendefrequenz in Abhängigkeit von diesem Wert unterschiedlich ist, durch das Rechen- und Steuermodul (10) umfaßt.

13. Vorrichtung zum Suchen nach einem Lawinenopfer, das ein Funksendegerät trägt, welches ständig ein Signal in Form elektromagnetischer Wellen mit einer standardisierten Frequenz sendet, wobei diese Vorrichtung folgendes aufweist: ein Empfangsmodul (12), das zum Empfangen der Signale eingerichtet ist, die von dem vom Opfer getragenen Sendegerät gesendet werden, Signalisierungsmittel und ein Rechen- und Steuermodul (10), das an den Ausgang des Empfangsmoduls (12) und an die Signalisierungsmittel (17, 18) angeschlossen ist, um die Signalisierungsmittel in Abhängigkeit von der Amplitude der vom Empfangsmodul empfangenen Signale zu steuern, wobei das Modul (10) folgendes umfaßt:
- Mittel zum Messen der Amplitude der vom Empfangsmodul (12) empfangenen Signale und
- Mittel zum Vergleichen der entsprechenden Amplituden von in wenigstens zwei verschiedenen Richtungen empfangenen Signalen miteinander, um die Richtung des vom Opfer getragenen Sendegerätes in bezug auf die Ausrichtung des Empfangsmoduls zu bestimmen und ein erstes Signalisierungsmittel zu steuern, das die so bestimmte Richtung des Sendegerätes anzeigt,
dadurch gekennzeichnet, daß das Modul (10) zusätzlich folgendes umfaßt:
- Mittel zum Vergleichen der Amplitude der vom Empfangsmodul (12) empfangenen Signale mit einer niedrigen Schwelle und zum Steuern eines zweiten Signalisierungsmittels in Abhängigkeit davon, ob die Amplitude des empfangen Signals die niedrige Schwelle überschreitet oder nicht, und
- Mittel zum Vergleichen der Amplitude der empfangenen Signale mit einer hohen Schwelle und zum Steuern eines dritten Signalisierungsmittels in Abhängigkeit davon, ob die Amplitude des empfangenen Signals die hohe Schwelle überschreitet oder nicht.

14. Vorrichtung nach Anspruch 13, dadurch gekennzeichnet, daß das Empfangsmodul (12) folgendes aufweist: eine Vorverstärkungs- und Verstärkungsstufe (24) für die Signale, die von einer zugeordneten Spule (13) mit der standardisierten Frequenz empfangen werden, eine Tiefpaßfiltereinrichtung (25), die auf die standardisierte Frequenz ausgerichtet ist, um die von der Stufe (24) erzeugten Signale zu filtern, und eine Schaltung (27) zur Signaldetektion und zur Steuerung der Verstärkung, die am Eingang die von der Filtereinrichtung (25) erzeugten Signale empfängt, um ihnen eine Logarithmusfunktion zuzuordnen.

15. Vorrichtung nach Anspruch 14, dadurch gekennzeichnet, daß sie einen Analog/Digital-Wandler (28) aufweist, um die von der Detektionsschaltung (27) erzeugten Signale in digitale Signale umzuwandeln, die am Eingang von Rechenmitteln (26) angelegt werden.

16. Vorrichtung nach einem der Ansprüche 13 bis 15, dadurch gekennzeichnet, daß das Rechenmodul (10) Mittel zum Steuern der Verstärkung aufweist, die an die von der Vorverstärkungs- und Verstärkungsstufe (24) empfangenen Signale angelegt wird.

17. Vorrichtung nach einem der Ansprüche 13 bis 16, dadurch gekennzeichnet, daß das Empfangsmodul (12) an zwei zugeordnete Spulen (13a, 13b) angeschlossen ist, und daß sie zwei Signalverarbeitungsketten aufweist, die jeweils mit den zugeordneten Spulen verbunden sind, wobei jede der beiden Ketten eine Vorverstärkungs- und Verstärkungsstufe (24a, 24b), eine Filterschaltung (25a, 25b) und eine Schaltung (27a, 27b) zur Signaldetektion und zur Steuerung der Verstärkung aufweist und diese beiden Ketten dem Rechenmodul (10) zwei repräsentative Signale der Amplitude der von den beiden Spulen (13a, 13b) empfangenen Signale liefern.

18. Vorrichtung nach einem der Ansprüche 13 bis 17, dadurch gekennzeichnet, daß sie akustische (18) und optische (17) Signalisierungsmittel aufweist, die durch das Rechenmodul (10) in Abhängigkeit von der Amplitude der empfangenen Signale gesteuert werden, wobei die optischen Mittel folgendes umfassen:
- ein erstes Anzeigelicht (19), das anzeigt, daß ein Signal mit der standardisierten Frequenz, dessen Amplitude die niedrige Schwelle überschreitet, vom Empfangsmodul empfangen wurde,
- ein zweites Anzeigelicht (20), das anzeigt, daß die Amplitude der empfangenen Signale sich bei einem maximalen Wert befindet, und
- ein drittes Anzeigelicht (21), das anzeigt, daß die Amplitude der empfangenen Signale die hohe Schwelle überschreitet.

19. Vorrichtung nach einem der Ansprüche 15 bis 18, dadurch gekennzeichnet, daß das Rechenmodul (10) einen Microcontroller (26) aufweist, der durch ein in einem nichtflüchtigen Speicher (29) gespeichertes Programm gesteuert wird, um die Analyse der empfangenen und vom Analog/Digital-Wandler (28) digitalisierten Signale durchzuführen und die Verstärkung der Stufe (24) sowie die akustischen und optischen Signalisierungsmittel (17, 18) zu steuern.

20. Vorrichtung nach einem der Ansprüche 13 bis 19, dadurch gekennzeichnet, daß das Opfer ein Gerät trägt, das mit dem des Retters identisch ist, wobei die Vorrichtung einen Wähler (16) aufweist, der es gestattet, wahlweise das Sendemodul (9) oder das Empfangsmodul (12) zu aktivieren.

21. Vorrichtung nach einem der Ansprüche 13 bis 20, dadurch gekennzeichnet, daß das vom Retter getragene Gerät eine Leuchtdiodenleiste (17) oder eine Digitalanzeige (33) aufweist, welche die ihn vom Opfer trennende Entfernung anzeigt, die in Abhängigkeit von der Amplitude des empfangenen Signals berechnet wird.

## Claims

1. Method for guiding a rescue worker, carrying a radio receiver device sensitive to a standardised frequency, searching for an avalanche victim wearing a radio transmitter device continually transmitting a signal in the form of electromagnetic waves, a said standardised frequency, the receiver device comprising means of reception (12) coupled with a computing and command module (10) conceived for analysing the received signals by means of reception, the method comprising the following phases:
- a phase consisting in detecting the presence of the transmitter device worn by the victim, during which the rescue worker covers the area snowed in by the avalanche, and
- a phase consisting of a directional searching for the victim, during which the rescue worker rotates the receiver device about a vertical axis, this phase including measurement by the computing and command module (10) of the amplitude of the received signals in at least two different directions, the comparison of these amplitudes by the module (10), for determining the direction of the transmitter device worn by the victim compared with the orientation of the transmitter device worn by the rescue worker, and the command (4, 4') by the module (10) of a first signalling means giving to the rescue worker one indication about the direction of the transmitter device,
characterized in that:
- the phase consisting in detecting the presence of the transmitter device includes the comparison (1), at a lower threshold by the computing and command means (10), of the amplitude of the received signals by the receiver device, and the command (2, 2') by the computing and command means (10) of a second signalling means for signalling to the rescue worker whether the amplitude of the received signals exceeds the lower threshold or not,
- moreover, the method includes a phase of progressing of the rescue worker, including measurement by the computing and command module (10) of the amplitude of the received signals for determining the direction of the transmitter device worn by the victim compared with the orientation of the receiver device worn by the rescue worker, the command (4, 4') by the module (10) of the first signalling means, the comparison (5) by the module (10) of the received signals at an upper threshold, the command (6, 6') by the module (10) of a third signalling means for indicating to the rescue worker whether the amplitude of the received signal exceeds the upper threshold or not.

2. Method according to claim 1,
characterized in that it includes the detection by the computing and command module (10) of the times when the amplitude of the received signals reaches a maximum value, for determining the direction of the transmitter device worn by the victim compared with the orientation of the receiver device worn by the rescue worker.

3. Method according to claim 1,
characterized in that it comprises the simultaneous measurement by the computing and command module (10) of the amplitude of the signals coming correspondingly from two different directions, and the comparison of these amplitudes, for determining the direction of the transmitter device worn by the victim compared with the orientation of the receiver device worn by the rescue worker.

4. The method according to one of the preceding claims,
characterized in that the phase consisting of detecting includes the automatic adjustment, by the computing and command module (10), of the sensibility of the receiver to the maximum, whereas the phases consisting of directional searching and of progression include the automatic adjustment by the module (10), at the sensibility of the receiver so that the amplitude of the received signals keep standing in a range of predetermined values.

5. Method according to the one of the preceding claims,
characterized in that, following the phase consisting of detecting the transmitter device, it comprises a phase of synchronisation and learning during which the computing and command module (10) synchronise the reception means (12) on the received signals and determines periodical timing window in which these signals are received, the upcoming phases doing measurement just during this periodical timing window.

6. Method according to one of the claims 3 to 5,
characterized in that the phases consisting in directional searching and of progression further include the determination by the computing and command module (10) of the rotate sense to apply to the receiver device and the indication to the rescue worker of this rotate sense.

7. Method according to claim 6,
characterized in that it further comprises the computing and command module (10) of the angle formed by the direction pointed out by the receiver device and the direction of the transmitter device worn by the victim, and the indication to the rescue worker of this angle value.

8. Method according to claim 2,
characterized in that it further comprises a phase of precise location of the victim during which the rescue worker covers the area in which the signals received exceeds the upper threshold, this phase including the analysis (3, 5) by the computing and command module (10) of the received signals for determining the times when their amplitude exceed the upper threshold and the times when it reaches a maximum value, and the command (4, 4', 6, 6') by the module (10) of the second and the third signalling means depending on whether the amplitude of the signals received have reached, or not, a maximum value and have exceeded the upper threshold, or not.

9. Method according to the claim 2 or 8,
characterized in that the determination (3) of the times when the amplitude of the received signals reaches a maximum value is made by determining the evolution sense of the amplitude and by comparing it to its previous value, the amplitude of the received signals being considered as maximum when it becomes decreasing after being increasing or unmoving.

10. Method according to one of the claims 2, 8, and 9,
characterized in that it comprises the emission (2, 2', 4, 4', 6, 6') of audible signals during times when the amplitude of the received signals exceeds the lower threshold, when it reaches a maximum value and when it decreases, and when it exceeds of the lower threshold.

11. Method according to one of the preceding claims,
characterized in that the determination by the module (10) of distance between the receiver device and the transmitter device depending on the amplitude of the received signals and on the indication to the rescue worker of this distance value.

12. Method according to one of the preceding claims,
characterized in that it comprises the determination by the computing and command module (10) of the distance between the receiver device and the transmitter device depending on the amplitude of the received signals and on the indication to rescue worker of this distance value by emission of audible bips which emission frequency varies depending on this value.

13. Device for searching an avalanche victim carrying a radio transmitter device which emit permanently an electromagnetic wave signal, at a standardised frequency, this device including a receiver module (12) conceived to receive emitted signals by the transmitter device worn by the victim, signalling means and computing and command means (10) connected to the emergence of the receiver module (12) and to the signalling means (17, 18), to command the signalling means depending on the amplitude of the received signals by receiver module, the module (10) including :
- means to measure the amplitude of the received signals by the receiver module (12), and
- means to compare the respective amplitudes of the received signals in at least two different directions, so that to determine the direction of the transmitter device worn by the victim compared with the orientation of the receiver module, and thus to command first signalling means indicating the direction of the transmitter device determined,
characterized in that the module (10) further includes :
- means to compare at a lower threshold of the amplitude of the received signals by the receiver module (12) and to command a second signalling means according that the amplitude of the received signal exceeds the lower threshold or not, and
- means to compare the amplitude of the received signals at an upper threshold and to command a third signalling means depending on the amplitude of the received signal exceeds the upper threshold or not.

14. Device according to claim 13,
characterized in that the receiver module (12) includes a stage of preamplification and amplification (24) of the signals received by a coil tuned (13) to the standardised frequency, a bandpass filtering means (25) centred on the standardised frequency to filter the signals coming from said stage (24), and a signal detection and gain control circuit (27) which receives, at input, the signals coming from said filtering means in order to apply them a logarithmic function thereto.

15. Device according to claim 14,
characterized in that it comprises an analog-to-digital converter (28) for converting the signals coming from the detection circuit (27) into a digital signal which are applied to the input of the computing means (26).

16. Device according to one of the claims 13 to 15,
characterized in that the computing means (10) include means to command the gain applied to the received signals by the preamplification and amplification stage (24).

17. Device according to one of the claims 13 to 16,
characterized in that the receiver module (12) is connected to two tuned coils (13a, 13b) and characterized in that it comprises two signals processing sequences respectively connected to the tuned coils, each of said two sequences comprising a preamplification and amplification stage (24a, 24b), a filtering circuit (25a, 25b) and a signal detection (27a, 27b) and gain control circuit, these two sequences providing the computing module (10) with two signals representative of the amplitudes of the signals by the coils (13a, 13b).

18. Device according to one of the claims 13 to 17,
characterized in that it comprises an audible (18) and optical (17) signalling means controlled by the computing module (10) as a function of the amplitude of the received signal, the optical means comprising :
- a first lamp (19) indicating that a signal, at the standardised frequency and of which the amplitude exceeds the lower threshold, has been received by the receiver module,
- a second lamp (20) indicating that the amplitude of the received signal is at a maximum value, and
- a third lamp (21) indicating that the amplitude of the received signal is in excess of the upper threshold.

19. Device according to one of the claims 15 to 18,
characterized in that the computing module (10) comprises a microcontroller (26) controlled by a program stored in a non-volatile memory (29), for analysing the received signals and digitised by the analog-to-digital converter (28), and for controlling the gain of the stage (24) and the audible and optical signalling means (17, 18).

20. Device according to one of the claims 13 to 19,
characterized in that the victim wears a device identical to that of the rescue worker, said device comprising a selector (16) enabling the transmitter module (9) or the receiver module to be activated alternately (12).

21. Device according to one of the claims 13 to 20,
characterized in that the device worn by the rescue worker comprises a strip (17) of light emitting diodes or a digital display (33) indicating the distance separating him from the victim and computed as a function of the amplitude of the received signal.
